# EUROPÄISCHE PATENTSCHRIFT

(11) **EP 0 666 469 B1**
(45) Veröffentlichungstag und Bekanntmachung des Hinweises auf die Patenterteilung: **31.03.1999**
(21) Anmeldenummer: 95100783.0
(22) Anmeldetag: 20.01.1995
(51) Int. Cl.: G01G 19/10

(54) **Achslast-Anzeigevorrichtung**
Device displaying the axle load
Dispositif indicateur de la charge à l'essieu

(30) Priorität: 02.02.1994 DE 4403110
(43) Veröffentlichungstag der Anmeldung: 09.08.1995
(73) Patentinhaber: DAIMLER-BENZ AKTIENGESELLSCHAFT, 70567 Stuttgart (DE)
(72) Erfinder: Köster, Rolf, Dipl.-Ing., D-70329 Stuttgart (DE); Fischer, Jörg, Dipl.-Ing., D-73728 Esslingen (DE)

(56) Entgegenhaltungen:
- DE-A- 3 906 987
- GB-A- 2 136 141
- US-A- 4 651 838
- US-A- 4 832 141
- US-A- 4 854 407

## Beschreibung

Die Erfindung betrifft eine Achslast-Anzeigevorrichtung eines gefederten Fahrzeugs, dessen Federaggregate das Fahrzeug mit beladungsabhängigem Bodenabstand abstützen und/oder fluidische bzw. pneumatische Verdrängeraggregate aufweisen bzw. als solche ausgebildet sind, deren Druck beladungsabhängig zur Erhaltung eines vorgegebenen Bodenabstandes steuerbar ist, wobei
- Druckmeßaufnehmer, die zumindest einem Teil der fluidischen bzw. pneumatischen Verdrängeraggregate zugeordnet sind, und/oder Wegaufnehmer, die den mit beladungsabhängigem Bodenabstand arbeitenden Federaggregaten zugeordnet sind und die Hubstellung der jeweiligen Achse relativ zum Fahrzeugaufbau registrieren, eine Anzeige steuern,
- die Anzeige nach einer vorgegebenen Korrelation zwischen Druck bzw. Hub einerseits und Achslast andererseits jeweils druck- bzw. hubabhängige Werte für die Achslast anzeigt,
- der jeweils angezeigte Wert durch Betätigung einer Justagehandhabe veränderbar ist,
- bei einer solchen Änderung automatisch die vor der Veränderung vorhandene Korrelation nach vorbestimmten Kriterien veränderbar ist und
- die Veränderung der die Korrelation wiedergebenden Funktion mittels einer nach Art eines Rechners arbeitenden Elektronik erfolgt, die eingangsseitig mit den Druckmeßaufnehmern und/oder den Wegaufnehmern und ausgangsseitig mit der Anzeige gekoppelt ist.

Um einen optimalen Einsatz von Last fahrzeugen zu gewährleisten, ist es zweckmäßig, die zulässigen Gewichtsgrenzen für die Beladung möglichst weitestgehend auszunutzen. Dazu ist eine Anzeige der jeweiligen Achslast erwünscht.

Im Zusammenhang mit luftgefederten Last fahrzeugen ist es aus der DE 39 06 987 A1 (US-A-4832141) bekannt, die Achslast-Anzeigevorrichtung so auszubilden, daß sie auf unterschiedliche Luftfederaggregate umgestellt werden kann. Dies geschieht dadurch, daß unterschiedliche Luftdruck-Achslast-Kennlinien, wie sie für verschiedene Luftfederaggregate typisch sind, eingestellt werden können. Gemäß der vorgenannten Druckschrift kann also die Anzeigeanordnung an unterschiedliche Konstruktionen bzw. Bemessungen der Luftfederaggregate angepaßt werden.

Bei dieser bekannten Anordnung wird die Tatsache ausgenutzt, daß das Maß des Luftdruckes in den Federbälgen der Luftfederaggregate ein zur Achslast analoges Maß darstellt.

Auch bei Fahrzeugen mit üblichen mechanischen Federn,beispielsweise Stahlfedern, läßt sich bislang die jeweilige Achslast nur ungenau ermitteln, obwohl der beladungsabhängige Bodenabstand grundsätzlich ein analoges Maß zur Achslast darstellt.

Deshalb ist es Aufgabe der Erfindung, eine Vorrichtung zu schaffen, welche die jeweilige Achslast mit hoher Genauigkeit anzuzeigen gestattet.

Diese Aufgabe wird erfindungsgemäß durch die eingangs angegebene Vorrichtung gelöst.

Die Erfindung beruht auf der allgemeinen Erkenntnis, daß Alterungsprozesse zu deutlichen, jedoch im wesentlichen vorbestimmten Änderungen der Korrelationen zwischen Fluid- bzw. Luftdruck und Achslast oder zwischen Bodenabstand und Achslast führen. Insbesondere beruht die Erfindung auf der erkenntnis, daß zur Erfassung dieser Änderungen die die Korrelationen wiedergebenden Kennlinien unter zumindest annähern-der Beibehaltung ihrer Form im wesentlichen nur verschwenkt werden müssen, um den Alterungsprozessen angepaßt zu werden.

Falls eine Abweichung zwischen der tatsächlichen und der angezeigten Achslast im Bereich höherer Werte auftritt, muß die Kennlinie im wesentlichen um ein Schwenkzentrum nahe eines geringer Achslast zugeordneten Kennlinienabschnittes verschwenkt werden, während bei einer Abweichung im Bereich geringer Achslasten eine Schwenkung der Kennlinie um ein Schwenkzentrum nahe eines höheren Achslasten zugeordneten Kennlinienabschnittes geschwenkt werden sollte.

Um gegebenenfalls die Montage unterschiedlicher Räder (Leichtmetall- oder Stahlräder) an einer Achse berücksichtigen zu können, sollte darüber hinaus die jeweilige Kennlinie auch im Sinne einer Parallelverschiebung veränderbar sein.

Erfindungsgemäß ist insbesondere vorgesehen, daß die Veränderung der die Korrelation wiedergebenden Funktion bzw. Kennlinie mittels einer nach Art eines Rechners arbeitenden Elektronik erfolgt, die eingangsseitig mit den Meßaufnehmern für den Fluid- bzw. Luftdruck oder den Bodenabstand und ausgangsseitig mit der Anzeigevorrichtung gekoppelt ist.

Bei der Erfindung steuern also die den Druck der Federaggregate bzw. den Bodenabstand wiedergebenden Signale der Meßwertaufnehmer die Anzeigevorrichtung derart, daß anstelle des Druckes bzw. des Bodenabstandes der zugehörige Wert der Achslast angezeigt wird. Bei der Herstellung wird dabei die Vorrichtung auf eine "Standardfunktion" eingestellt, so daß jedem Wert des Druckes bzw. des Bodenabstandes ein "Standardwert" der Achslast zugeordnet wird. Wenn nun bei einer Wiegung des Fahrzeuges festgestellt wird, daß der angezeigte Wert der Achslast nicht mit dem tatsächlichen Wert der Achslast übereinstimmt, so wird die Anzeigevorrichtung mittels einer entsprechenden Handhabe justiert, derart, daß der angezeigte Wert der Achslast in Aufwärts- oder Abwärtsrichtung dem tatsächlichen Wert der Achslast angepaßt wird.

Die Besonderheit der Erfindung liegt nun darin, daß bei dieser Justage, d.h. bei der Justierung eines einzigen anzuzeigenden Wertes der Achslast, die Korrelationsfunktion, welche die Werte des Druckes bzw. des Bodenabstandes bzw. die Signale der entsprechenden Meßaufnehmer mit den angezeigten Achslastwerten verknüpft, zwangsläufig verändert wird, und zwar nach vorgegebenen Kriterien, mit denen die Alterungsprozesse der Federaggregate berücksichtigt werden.

Mit der vorzugsweise vorgesehenen Elektronik können dabei grundsätzlich auch komplizierte Kriterien automatisch berücksichtigt werden.

Während der Fahrer des Fahrzeuges bei einer Justage also lediglich den angezeigten Wert der Achslast auf den mittels Waage gemessenen Wert der Achslast einstellt, kann also die Korrelationsfunktion automatisch in komplizierterer Weise verändert werden.

Dies ist möglich, weil sehr zuverlässige Erfahrungswerte darüber vorliegen, wie sich die Korrelation zwischen Bodenabstand und Achslast bei Stahlfedern bzw. zwischen Luftdruck und Achslast bei Luftfederaggregaten bei längerem Einsatz ändert.

Um die Gewichte der jeweiligen Räder berücksichtigen zu können, kann vorgesehen sein, die jeweiligen Radgewichte wertemäßig in die Anzeigevorrichtung einzugeben, so daß diese Werte als additive Konstante berücksichtigt werden können. Statt dessen ist es auch möglich, mittels einer Handhabe od.dgl. lediglich einzugeben, welcher Radtyp - z.B. Leichtmetallrad oder Stahlrad - vorliegt, um typische Gewichte derartiger Räder berücksichtigen zu können.

Nachfolgend wird die Erfindung anhand der Zeichnung näher erläutert.

Dabei zeigt die einzige Figur eine schaltplanartige Darstellung einer besonders bevorzugten Ausführungsform der Erfindung.

An den nicht näher dargestellten Luftfederaggregaten des Fahrzeuges sind jeweils Druckaufnehmer 1 angeordnet, die im dargestellten Beispiel mittels eines entsprechenden Wandlers 2 ein den jeweiligen Luftdruck P wiedergebendes elektrisches Signal U erzeugen. Bei diesem elektrischen Signal kann es sich um eine zum Luftdruck analoge elektrische Spannung handeln. Statt dessen ist es jedoch auch möglich, daß eine dem Luftdruck entsprechende Folge digitaler elektrischer Signale erzeugt wird.

Das Ausgangssignal U wird an den Eingang einer Elektronik 3 weitergegeben, die ausgangsseitig eine Achslastanzeige 4 entsprechend dem Eingangssignal U steuert.

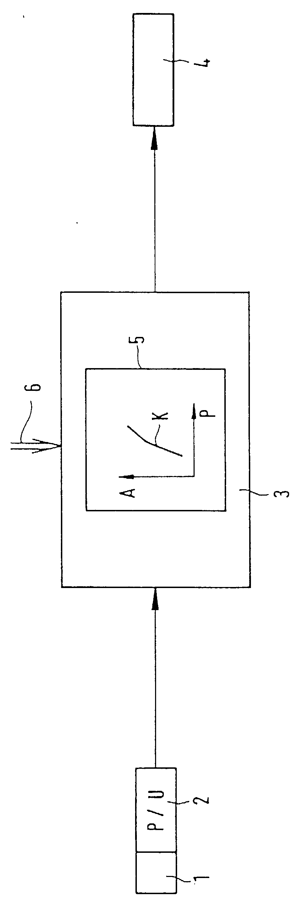

Bei der Herstellung wird die Elektronik 3 auf eine Standardfunktion eingestellt, derart, daß die von der Achslastanzeige 4 angezeigten Werte A den von den Signalen U repräsentierten Werten des Luftdruckes P in den Federaggregaten entsprechend der Kennlinie K in dem Diagramm 5 zugeordnet sind.

Mittels einer Handhabe 6 läßt sich die Elektronik 3 so verstellen, daß der auf der Achslastanzeige 4 angezeigte Wert wahlweise erhöht oder erniedrigt wird.

Immer wenn mittels einer Waage bei einer Wiegung des Fahrzeuges der tatsächliche Wert der Achslast genau bestimmt wird, kann dann der Fahrer (oder eine andere Person) mittels der Handhabe die Elektronik 3 so verstellen, daß der auf der Achslastanzeige 4 angezeigte Wert genau mit dem mittels Waage ermittelten Wert übereinstimmt.

Bei Betätigung der Handhabe 6 kann die Kennlinie K prinzipiell in beliebiger, durch die Konstruktion bzw. die unverändert bleibende Programmierung der Elektronik 3 fest vorgegebener Weise verändert werden, jedoch derart, daß dem jeweils bei der Justage vorliegenden Wert des Luftdruckes der durch die Wiegung ermittelte tatsächliche Wert der Achslast zugeordnet wird.

Im einfachsten Beispiel kann die Kennlinie K ohne Veränderung ihrer Form in Aufwärts- oder Abwärtsrichtung verschoben werden, bis durch die Kennlinie K dem bei der Justage vorliegenden Wert des Luftdruckes der tatsächliche Wert der Achslast zugeordnet wird.

Grundsätzlich können jedoch auch andere Veränderungen der Kennlinie K vorgenommen werden. Beispielsweise kann die Kennlinie K bei der Justage auch zwangsläufig etwas in Seitwärtsrichtung verschoben oder um einen beliebigen Punkt gedreht werden. Schließlich ist es auch möglich, die Form der Kennlinie K zu ändern.

Alle diese Änderungen erfolgen bei der Erfindung automatisch.

Da ein Fahrzeug im Verlauf seines Einsatzes verhältnismäßig oft gewogen wird, besteht entsprechend häufig die Möglichkeit einer Justage. Damit wird die Kennlinie K zwangsläufig den jeweiligen Gegebenheiten angepaßt, so daß eine hohe Meßgenauigkeit gegeben ist.

Hierbei ist hervorzuheben, daß die Kennlinie K bei der Justage überhaupt nicht angezeigt werden muß. Die die Justage vornehmende Person braucht die Kennlinie K überhaupt nicht zu kennen bzw. deren Bedeutung zu verstehen.

Im Falle einer mit Stahlfedern od.dgl. versehenen Achse hat die Anzeigevorrichtung einen grundsätzlich gleichen Aufbau wie im Falle von Luftfederaggregaten. Anstelle des Druckaufnehmers 1 sowie des Wandlers 2 braucht lediglich ein Meßaufnehmeraggregat angeordnet zu sein, welches auf den Abstand zwischen Achse und Aufbau reagiert und ein diesen Abstand wiedergebendes elektrisches Signal erzeugt, welches der Elektronik zugeführt wird. Darüber hinaus muß dann die Kennlinie K die Korrelation zwischen Achslast A und dem Abstand b zwischen Aufbau und Achse wiedergeben.

## Patentansprüche

1. Achslast-Anzeigevorrichtung eines gefederten Fahrzeugs, dessen Federaggregate das Fahrzeug mit beladungsabhängigem Bodenabstand abstützen und/oder fluidische bzw. pneumatische Verdrängeraggregate aufweisen bzw. als solche ausgebildet sind, deren Druck beladungsabhängig zur Erhaltung eines vorgegebenen Bodenabstandes steuerbar ist, wobei
- Druckmeßaufnehmer (1), die zumindest einem Teil der fluidischen bzw. pneumatischen Verdrängeraggregate zugeordnet sind, und/oder Wegaufnehmer, die den mit beladungsabhängigem Bodenabstand arbeitenden Federaggregaten zugeordnet sind und die Hubstellung der jeweiligen Achse relativ zum Fahrzeugaufbau registrieren, eine Anzeige (4) steuern,
- die Anzeige (4) nach einer vorgegebenen Korrelation zwischen Druck bzw. Hub einerseits und Achslast andererseits jeweils druck- bzw. hubabhängige Werte für die Achslast anzeigt,
- der jeweils angezeigte Wert durch Betätigung einer Justagehandhabe (6) veränderbar ist,
- bei einer solchen Änderung automatisch die vor der Veränderung vorhandene Korrelation nach vorbestimmten Kriterien veränderbar ist und
- die Veränderung der die Korrelation wiedergebenden Funktion mittels einer nach Art eines Rechners arbeitenden Elektronik (3) erfolgt, die eingangsseitig mit den Druckmeßaufnehmern (1) und/oder den Wegaufnehmern und ausgangsseitig mit der Anzeige (4) gekoppelt ist.

2. Achslast-Anzeigevorrichtung nach Anspruch 1,
**dadurch gekennzeichnet,** daß die Korrelation unter Berücksichtigung typischer Alterungsprozesse und/oder derart veränderbar ist, daß bei einer Änderung im Bereich geringer Achslasten eine andere Abänderung der Korrelation als bei einer Änderung im Bereich höherer Achslasten erfolgt.

3. Achslast-Anzeigevorrichtung nach Anspruch 1 oder 2,
**dadurch gekennzeichnet,** daß die Veränderung der Korrelationsfunktion einer Verlagerung und/oder Verschwenkung einer Kennlinie (K) in einem Luftdruck-Achslast-Koordinatensystem bzw. in einem Bodenabstand-Achslast-Koordinatensysten entspricht.

4. Achslast-Anzeigevorrichtung nach einem der Ansprüche 1 bis 3,
**dadurch gekennzeichnet,** daß die Vorrichtung eine Eingabe für Radgewichte bzw. unterschiedliche Radtypen (Leichtmetall- oder Stahlrad) aufweist.

## Claims

1. Axle-load indicator device of a spring-suspended motor vehicle, the spring assemblies of which support the vehicle on the basis of distance from the ground determined by load and/or have fluidic or pneumatic displacement assemblies and are designed as such, the pressure of which can be controlled depending on the load in order to maintain a predetermined distance from the ground, in which
- a display (4) is controlled by pressure measurement sensors (1) which are assigned at least to a part of the fluidic or pneumatic displacement assemblies, and/or travel sensors which are assigned to the spring assemblies operating on the basis of distance from the ground and record the displacement position of the respective axle relative to the vehicle body,
- the display (4) displays values for the axle load dependent on pressure and displacement respectively in accordance with a predetermined correlation between pressure and displacement on the one hand and axle load on the other,
- the respective indicated value can be adjusted by operating an adjustment manipulator (6),
- when such an adjustment is made, the correlation available prior to the adjustment can be automatically modified in accordance with predetermined criteria and
- the function reproducing the correlation can be adjusted by means of an electronic system (3) operating as a type of computer which is coupled with the pressure measurement sensors (1) and/or travel sensors at the input end and with the display (4) at the output end.

2. Axle-load display device as claimed in claim 1,
**characterised in that**
the correlation can be adjusted taking account of typical acceleration processes and/or in such a way that a different adjustment is made to the correlation if there is a change in the region of low axle loads than if there is a change in the region of high axle loads.

3. Axle-load display device as claimed in claim 1 or 2,
**characterised in that**
the adjustment to the correlation function corresponds to a displacement and/or shift of a characteristic curve (K) in an air-pressure axle-load system of coordinates and in a ground-distance axle-load system of coordinates.

4. Axle-load display device as claimed in one of claims 1 to 3,
**characterised in that**
the device has an input for wheel weights and different wheel types (light alloy or steel wheel).

## Revendications

1. Dispositif indicateur de la charge par essieu d'un véhicule à suspension dont les organes de suspension supportent le véhicule avec une garde au sol qui dépend du chargement et/ou comportent des organes hydrauliques ou pneumatiques de type volumétrique, ou sont réalisés comme tels, dont la pression est pilotable en fonction du chargement en vue de la préservation d'une garde au sol préfixée, dans lequel
■ des capteurs de pression (1), coordonnés à une partie au moins des organes hydrauliques ou pneumatiques de type volumétrique, et/ou des capteurs de course, coordonnés aux organes de suspension fonctionnant avec la garde au sol dépendante du chargement, et enregistrant la position en hauteur de l'essieu considéré par rapport à la carrosserie du véhicule, commandent un affichage (4),
■ l'affichage (4) indique, suivant une corrélation préfixée entre la pression ou la course d'une part et la charge d'essieu d'autre part, des valeurs dépendant respectivement de la pression ou de la course pour la charge d'essieu,
■ la valeur indiquée peut être changée par l'actionnement d'un organe d'ajustement manuel (6),
■ lors d'un tel changement, la corrélation existant avant le changement est modifiable automatiquement selon des critères prédéterminés et
■ la modification de la fonction reproduisant la corrélation s'effectue au moyen d'une électronique (3) fonctionnant à la façon d'un calculateur, dont le côté entrée est couplé aux capteurs de pression (1) et/ou aux capteurs de course et dont le côté sortie est couplé à l'affichage (4).

2. Dispositif indicateur de la charge par essieu selon la revendication 1, caractérisé en ce que la corrélation est modifiable avec prise en compte de processus typiques de vieillissement et/ou est modifiable de manière que dans le cas d'une modification dans le domaine de faibles charges d'essieu, la modification opérée diffère de celle opérée dans le cas d'une modification dans le domaine de charges d'essieu plus élevées.

3. Dispositif indicateur de la charge par essieu selon la revendication 1 ou 2, caractérisé en ce que la modification de la fonction de corrélation correspond à un décalage et/ou une rotation d'une courbe caractéristique (K) dans un système de coordonnées pression d'air-charge d'essieu ou dans un système de coordonnées garde au sol-charge d'essieu.

4. Dispositif indicateur de la charge par essieu selon une des revendications 1 à 3, caractérisé en ce que le dispositif indicateur comporte un dispositif d'entrée pour l'introduction de poids de roues ou de différents types de roues (roues en alliage léger ou roues en acier).
